# EUROPÄISCHE PATENTANMELDUNG

(11) **EP 1 739 315 A2**
(43) Veröffentlichungstag der Anmeldung: **03.01.2007**
(21) Anmeldenummer: 06010132.6
(22) Anmeldetag: 17.05.2006
(51) Int. Cl.: F16B 23/00

(54) **Selbstschneidende Betonschraube und Werkzeug zum Eindrehen einer derartigen Schraube**

(30) Priorität: 02.07.2005 DE 102005031014
(71) Anmelder: fischerwerke Artur Fischer GmbH & Co. KG, 72178 Waldachtal (DE)
(72) Erfinder: Schäffer, Marc, 72160 Horb-Bildechingen (DE); Becker, Jan-Christian, 33803 Steinhagen (DE); Hacker, Oliver, 72160 Horb (DE); Schillinger, Peter, 72224 Ebhausen (DE)
(74) Vertreter: Suchy, Ulrich Johannes

(57) **Zusammenfassung**

Die Erfindung betrifft eine selbstschneidende Betonschraube (1), die außer einem Betonschraubengewinde (2) ein Maschinengewinde (5) aufweist, auf das eine Mutter (6) aufgeschraubt ist, die durch ein Formschlusselement (9) nach Art einer Welle-Naben-Verbindung drehfest auf der Betonschraube (1) gehalten ist. Die Betonschraube (2) lässt sich durch Drehbeaufschlagung der Mutter (6) in ein Bohrloch (3) eindrehen. Sitzt das Formschlusselement (9) auf, wird es von einem Kunststoffstift (10) außer Eingriff gedrückt, so dass die Mutter (6) auf dem Maschinengewinde (5) der Betonschraube (1) drehbar ist und festgezogen werden kann.

## Beschreibung

Die Erfindung betrifft eine selbstschneidende Betonschraube mit den Merkmalen des Oberbegriffs des Anspruchs 1 sowie ein Werkzeug zum Eindrehen einer selbstschneidenden Betonschraube mit den Merkmalen des Oberbegriffs des Anspruchs 7.

Selbstschneidende Betonschrauben sind an sich bekannt, beispielhaft wird auf die DE 198 20 671 A1 verwiesen. Selbstschneidende Betonschrauben werden ohne Verwendung eines Dübels oder dgl. in ein Bohrloch in Beton eingeschraubt, wobei sich ihr Gewinde in die Bohrlochwand schneidet. Das Gewinde der Betonschraube, das sich beim Eindrehen in das Bohrloch in die Bohrlochwandung schneidet, wird nachfolgend als Betonschraubengewinde bezeichnet werden.

Die Erfindung hat sich zur Aufgabe gesetzt, die Befestigung eines Gegenstands mit einer selbstschneidenden Betonschraube zu vereinfachen.

Diese Aufgabe wird erfindungsgemäß durch die selbstschneidende Betonschraube mit den Merkmalen des Anspruchs 1 und durch das Werkzeug mit den Merkmalen des Anspruchs 7 gelöst.

Die erfindungsgemäße, selbstschneidende Betonschraube weist ein Betonschraubengewinde auf, das sich beim Eindrehen der Betonschraube in eine Bohrlochwand schneidet. Außer dem Betonschraubengewinde weist die erfindungsgemäße Betonschraube ein Maschinengewinde auf, also beispielsweise ein metrisches Gewinde. Vorzugsweise ist das Maschinengewinde ein Außengewinde, es ist allerdings auch ein Innengewinde denkbar. Auf oder in das Maschinengewinde der Betonschraube ist ein Schraubelement auf- oder eingeschraubt, das selbstlösend drehfest mit der Betonschraube verbunden ist. Das Schraubelement ist vorzugsweise eine Mutter, die auf ein Außengewinde als Maschinengewinde der Betonschraube aufgeschraubt und selbstlösend drehfest mit der Betonschraube verbunden ist. Ist das Maschinengewinde der Betonschraube ein Innengewinde, ist das Schraubelement vorzugsweise eine in das Maschinengewinde eingeschraubte Schraube. Durch die drehfeste Verbindung des Schraubelements mit der Betonschraube kann ein Drehmoment zum Eindrehen der Betonschraube in ein Bohrloch am Schraubelement aufgebracht werden, ein Drehwerkzeug zum Eindrehen der Betonschraube greift also am Schraubelement an. Nach dem Eindrehen der Betonschraube in das Bohrloch wird die drehfeste Verbindung mit dem Schraubelement gelöst und das Schraubelement wird festgezogen. Dadurch wird ein zu befestigender Gegenstand, durch den die Betonschraube durchgesteckt worden ist, gegen den Untergrund gespannt, in den die Betonschraube eingeschraubt ist. Das Drehwerkzeug muss nach dem Eindrehen der Betonschraube zum Festspannen des Gegenstands nicht abgesetzt und es muss auch kein anderes Drehwerkzeug angesetzt werden, das Eindrehen der Betonschraube in das Bohrloch und das Festspannen des zu befestigenden Gegenstands kann in einem durchgehenden, schraubenden Arbeitsgang erfolgen. Da das Festspannen des zu befestigenden Gegenstands am Untergrund über das Maschinengewinde erfolgt, kann eine höhere Spannkraft erzielt werden, weil das Maschinengewinde üblicherweise eine kleinere Steigung als das Betonschraubengewinde aufweist. Das Anziehen des Schraubelements auf dem Maschinengewinde der Betonschraube ist "weich" im Vergleich mit einem "harten" Anziehen beim Eindrehen der Betonschraube in das Bohrloch aufgrund der größeren Steigung des Betonschraubengewindes und des Selbstschneidens des Betonschraubengewindes in die Bohrlochwand. Das Maschinengewinde der Betonschraube vermittelt ein Gefühl für das Anzugmoment, das beim Eindrehen einer Betonschraube nicht vorhanden ist, da eine Betonschraube zum Einschrauben in ein Bohrloch üblicherweise drehschlagend angetrieben wird. Die Erfindung ermöglicht das Anziehen mit einem vorgegebenen Anziehmoment, was bei einem drehschlagenden Einschrauben einer Betonschraube nicht möglich ist.

Vorzugsweise ist die drehfeste Verbindung des Schraubelements mit der Betonschraube selbstlösend. Insbesondere ist die drehfeste Verbindung wegabhängig selbstlösend, beispielsweise bei Erreichen einer vorgegebenen Einschraubtiefe der Betonschraube in ein Bohrloch oder bei Aufziehen auf einem zu befestigenden Gegenstand. Die drehfeste Verbindung kann einen Auslöser, beispielsweise einen Stift oder dgl. aufweisen, der bei Aufsitzen auf einer Oberfläche die drehfeste Verbindung löst. Die drehfeste Verbindung löst sich dadurch selbsttätig, der Eindrehvorgang der Betonschraube muss zum Anziehen des Schraubelements nicht unterbrochen werden.

Eine Ausgestaltung der Erfindung sieht ein Formschlusselement für die drehfeste Verbindung vor, das ein Drehmoment durch Formschluss vom Schraubelement auf die Betonschraube überträgt und das zum Selbstlösen der drehfesten Verbindung ausgerückt wird oder selbsttätig ausrückt und dadurch den Formschluss zum Schraubelement und/oder zur Betonschraube verliert. Die drehfeste Verbindung des Schraubelements mit der Betonschraube kann nach Art bekannter Welle-Naben-Verbindungen beispielsweise mit einer Nut in der Betonschraube und im Schraubelement einliegenden Feder oder einem Keil erfolgen. Zum Lösen der drehfesten Verbindung kann die Feder oder der Keil durch Aufsitzen auf einer Oberfläche aus der Nut herausgeschoben werden.

Das erfindungsgemäße Werkzeug mit den Merkmalen des Anspruchs 7 weist einen ersten Werkzeugsitz zu einem durch Formschluss drehfesten Ansetzen an einem Werkzeugsitz der Betonschraube und einen zweiten Werkzeugsitz zu einem durch Formschluss drehfesten Ansetzen an einem Werkzeugsitz eines auf/in ein Maschinengewinde der Betonschraube auf-/eingeschraubten Schraubelements auf. Die beiden Werkzeugsitze des Werkzeugs sind koaxial zueinander und axial hintereinander angeordnet. Beispiele derartiger Werkzeugsitze, die komplementär an der Betonschraube und an dem auf die Betonschraube aufgeschraubten Schraubelement einerseits und am Werkzeug andererseits vorhanden sind, sind Außen- und Innenmehrkante, sternförmige Werkzeugsitze (beispielsweise Torx) und Schlitze oder Kreuzschlitze sowie dazu passende Klingen. Beim Eindrehen der Betonschraube stehen die beiden Werkzeugsitze des Werkzeugs drehfest in Eingriff mit den komplementären Werkzeugsitzen der Betonschraube und des Schraubelements. Ist die Betonschraube eingeschraubt und sitzt das Werkzeug auf einer Oberfläche auf, bewegt sich die Betonschraube bei weiterem drehenden Antrieb axial weiter, wogegen sich das Werkzeug axial nicht mehr weiterbewegt. Dadurch kommt der Werkzeugsitz der Betonschraube außer Eingriff vom komplementären Werkzeugsitz des Werkzeugs. Das Werkzeug treibt nur noch das Schraubelement drehend an, so dass das Schraubelement festgezogen wird. Mit dem erfindungsgemäßen Werkzeug lässt sich in einem ununterbrochenen schraubenden Arbeitsgang zunächst die Betonschraube in ein Bohrloch eindrehen und ohne Unterbrechung oder Absetzen das Schraubelement festziehen.

Eine Weiterbildung der Erfindung sieht vor, dass die beiden Werkzeugsitze des Werkzeugs axial zueinander verschieblich und drehfest miteinander sind. Vorzugsweise sind die beiden Werkzeugsitze axial zueinander gefedert. Das hat folgenden Grund: Beim Eindrehen in den Untergrund steht die Betonschraube nicht nur unter Torsionsspannung, sondern auch unter axialer Druckspannung. Ist die Betonschraube eingedreht und kommt sie vom ersten Werkzeugsitz des Werkzeugs frei, baut sich die Spannung schlagartig ab, die Betonschraube schlägt gegen den Werkzeugsitz und verschleißt ihn. Durch die axiale Beweglichkeit des Werkzeugsitzes kann dieser ausweichen, ein Verschleiß des ersten Werkzeugsitz wird vermieden oder zumindest erheblich verringert. Ist der erste Werkzeugsitz zusätzlich federbeaufschlagt, wird er beim Eindrehen der Betonschraube in den Untergrund durch Reibschluss zwischen dem Werkzeugsitz der Betonschraube und dem ersten Werkzeugsitz des Werkzeugs in axialer Richtung gegen die Federkraft bewegt, ein Federelement oder dgl. wird vorgespannt. Kommt der Werkzeugsitz der Betonschraube außer Eingriff vom ersten Werkzeugsitz des Werkzeugs, bewegt das vorgespannte Federelement oder dgl. den ersten Werkzeugsitz des Werkzeugs weg von der Betonschraube, so dass die Betonschraube nicht gegen den Werkzeugsitz schlägt. Verschleiß des ersten Werkzeugsitz wird dadurch vermieden.

Die Erfindung wird nachfolgend anhand in der Zeichnung dargestellter Ausführungsbeispiele näher erläutert. Es zeigen:
- Figur 1: eine erfindungsgemäße Betonschraube in Stirnansicht gemäß Pfeil I in Figur 3;
- Figur 2: eine abgebrochene, perspektivische Darstellung der Betonschraube aus Figur 1 ohne Mutter;
- Figur 3: die Betonschraube aus Figur 1 in Seitenansicht; und
- Figur 4: einen Achsschnitt eines erfindungsgemäßen Werkzeugs in anderem Maßstab.

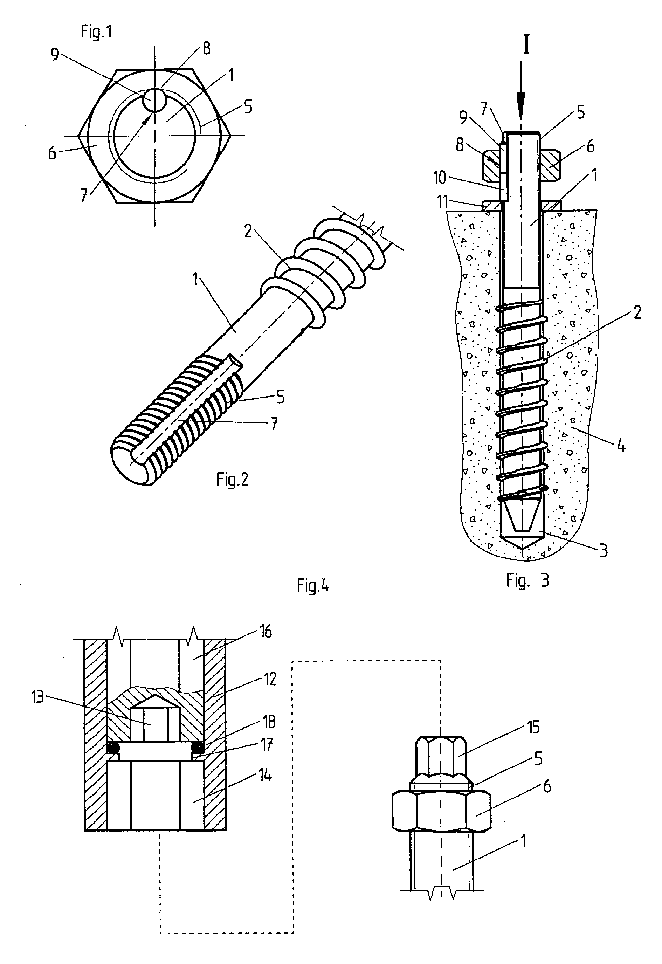

Die in Figuren 1 - 3 dargestellte, erfindungsgemäße, selbstschneidende Betonschraube 1 weist ein Betonschraubengewinde 2 auf, mit dem sie wie in Figur 3 zu sehen, in ein Bohrloch 3 in einem Untergrund 4 aus beispielsweise Beton eindrehbar ist. Beim Eindrehen in das Bohrloch 3 schneidet sich das Betonschraubengewinde 2 in eine Bohrlochwand ein.

Außer dem Betonschraubengewinde 2 weist die Betonschraube 1 ein Maschinengewinde 5, beispielsweise ein metrisches Gewinde, an einem Ende auf. Auf das metrische Gewinde 5 ist eine Mutter 6 aufgeschraubt, die ein Schraubelement der Betonschraube 1 bildet. Im Bereich des Maschinengewindes 5 weist die Betonschraube 1 eine achsparallel verlaufende Nut 7 mit halbkreisförmigem Querschnitt auf. Die Mutter 6 weist eine korrespondierende Nut 8 mit ebenfalls halbkreisförmigem Querschnitt auf, die die Nut 7 der Betonschraube 1 im Bereich der Mutter 6 zu einem Loch mit kreisförmigem Querschnitt ergänzt. In die Nuten 7, 8 ist ein zweiteiliger Zylinderstift 9, 10 eingelegt, der die Mutter 6 durch Formschluss drehfest mit der Betonschraube 1 verbindet. Der Zylinderstift 9, 10 besteht aus einem Metallstift 9 und einem Kunststoffstift 10. Die Mutter 6 befindet sich zunächst im Bereich des Metallstifts 9.

Der Metallstift 9 ist dem Betonschraubengewinde 2 abgewandeten Ende der Betonschraube 1 zugewandt. Der Kunststoffstift 10 befindet sich auf einer dem Betonschraubengewinde 2 zugewandten Seite des Metallstifts 9. Die drehfeste Verbindung der Mutter 6 mit der Betonschraube 1 mittels des Zylinderstifts 9, 10 kann als Welle-Naben-Verbindung angesehen werden, wobei der in den Nuten 7, 8 der Betonschraube 1 und der Mutter 6 einliegende Zylinderstift 9, 10 eine Gleitfeder kreisförmigen Querschnitts bildet. In Figur 2 ist die Betonschraube 1 ohne die Mutter 6 und den Zylinderstift 9, 10 gezeichnet.

Durch die drehfeste Verbindung der Mutter 6 mit der Betonschraube 1 kann ein Drehwerkzeug zum Eindrehen der Betonschraube 1 in das Bohrloch 3 an der Mutter 6 angesetzt werden. Ist die Betonschraube 1 wie in Figur 3 dargestellt in das Bohrloch 3 eingedreht, sitzt der Zylinderstift 9, 10 auf einer Oberfläche eines mit der Betonschraube 1 am Untergrund 4 zu befestigenden Bauteils 11 auf. Bei weiterem Eindrehen der Betonschraube 1 wird der Zylinderstift 9, 10 zurückgehalten. Er bewegt sich nicht mehr axial mit der Betonschraube 1 mit und wird infolgedessen in Richtung des dem Betonschraubengewinde 2 fernen Endes der Betonschraube 1 verschoben. Dadurch gelangt die Mutter 6 in den Bereich des Kunststoffstifts 10, den sie abschert. Die drehfeste Verbindung zwischen der Mutter 6 und der Betonschraube 1 ist gelöst, bei weiterem Drehantrieb der Mutter 6 schraubt sich die Mutter 6 auf dem Maschinengewinde 5 der Betonschraube 1 in Richtung des Untergrunds 4 und spannt den zu befestigenden Gegenstand 11 gegen den Untergrund 4. Die Betonschraube 1 wird dabei nicht mehr bewegt. Das Festspannen des zu befestigenden Gegenstands 11 erfolgt also durch Drehung der Mutter 6 auf dem Maschinengewinde 5 der Betonschraube 1.

Die drehfeste Verbindung der Mutter 6 mit der Betonschraube 1 durch den Zylinderstift 9, 10 ist wie beschrieben selbstlösend und zwar wegabhängig selbstlösend durch das Aufsitzen des Zylinderstifts 9, 10 auf dem zu befestigenden Gegenstand 11. Der Kunststoffstift 10 kann als Auslöser zum Lösen der drehfesten Verbindung zwischen der Mutter 6 und der Betonschraube 1 bei Aufsitzen auf dem zu befestigenden Gegenstand 11 bezeichnet werden. Der Metallstift 9 des Zylinderstifts 9, 10 bildet ein Formschlusselement, das ein Drehmoment von der Mutter 6 durch Formschluss auf die Betonschraube 1 überträgt.

Das in Figur 4 dargestellte, erfindungsgemäße Werkzeug 12 weist zwei Innensechskante 13, 14 unterschiedlicher Schlüsselweite auf. Die Innensechskante 13, 14 sind koaxial zueinander und axial hintereinander, im dargestellten Ausführungsbeispiel unmittelbar aneinander anschließend, angeordnet. Der Innensechskant 14 mit der größeren Schlüsselweite ist axial länger als der Innensechskant 13 mit der kleineren Schlüsselweite. Der Innensechskant 13 mit der kleineren Schlüsselweite bildet einen ersten Werkzeugsitz des erfindungsgemäßen Werkzeugs 12, er dient zu einem durch Formschluss drehfesten Ansetzen an einem Werkzeugsitz 15 einer Betonschraube 1, die einen komplementären Werkzeugsitz, im dargestellten Ausführungsbeispiel also einen Außensechskant 15 aufweist.

Der erste Werkzeugsitz 13 des Werkzeugs 12 ist axial verschieblich und drehfest mit dem zweiten Werkzeugsitz 14. Als drehfeste Schiebeführung ist der erste Werkzeugsitz 13 im dargestellten Ausführungsbeispiel in einem Außensechskant 16 angebracht, der drehfest und verschieblich in einem Innensechskant des Werkzeugs 12 geführt ist. Zwischen einer Stirnfläche des Außensechskants 16 und einem nach innen stehenden Radialflansch 17 des Werkzeugs 12 ist ein Gummiring 18 oder ein sonstiger elastischer Ring als Federelement angeordnet.

Der Innensechskant 14 mit der größeren Schlüsselweite des Werkzeugs 12 dient zu einem durch Formschluss drehfesten Ansetzen an einer Mutter 6, die auf ein Maschinengewinde 5 der Betonschraube 1 geschraubt ist. Die Werkzeugsitze 13, 14 müssen nicht zwingend Sechskante sein, es kommen an sich beliebige Werkzeugsitze, also beispielsweise Dreikante oder Vierkante, Sternformen wie beispielsweise Torx, oder Schlitze und Kreuzschlitze und komplementäre Klingen in Betracht, die am Werkzeug 12 komplementär zu einem Werkzeugsitz 15 der Betonschraube 1 und einer auf diese aufgeschraubten Mutter 6 oder eingeschraubten Schraube ausgebildet sind. Die Werkzeugsitze 13, 14 können auch verschiedener Art, also beispielsweise ein Innensechskant und eine Klinge sein (nicht dargestellt). Das ist abhängig vom Werkzeugsitz der Betonschraube und vom Werkzeugsitz des auf/in die Betonschraube auf- oder eingeschraubten Schraubelements.

Zum Eindrehen der Betonschraube 1 wird das Werkzeug 12 so auf diese aufgesetzt, dass der Innensechskant 13 mit der kleineren Schlüsselweite formschlüssig mit dem Außensechskant 15 der Betonschraube 1 in Eingriff steht, und dass der Innensechskant 14 mit der größeren Schlüsselweite formschlüssig mit der Mutter 6 in Eingriff steht. Die Betonschraube 1 kann jetzt mit dem Werkzeug 12 in ein Bohrloch eingedreht werden. Sitzt das Werkzeug 12 auf einem zu befestigenden Gegenstand 11 auf, durch den die Betonschraube 1 durchgesteckt ist, wird das Werkzeug 12 zurückgehalten, wogegen sich die Betonschraube 1 bei weiterem drehenden Antrieb weiter in das Bohrloch einschraubt, d. h. die Betonschraube 1 bewegt sich axial weiter. Dadurch gelangt der Außensechskant 15 der Betonschraube 1 außer Eingriff vom Innensechskant 13 mit der kleineren Schlüsselweite des Werkzeugs 12. Der drehfeste Sitz des Werkzeugs 12 auf der Betonschraube 1 ist dadurch gelöst. Der drehfeste Sitz des Werkzeugs 12 auf der Mutter 6 durch den Innensechskant 14 mit der größeren Schlüsselweite besteht fort. Durch weiteren drehenden Antrieb des Werkzeugs 12 wird die Mutter 6 angezogen.

Beim Eindrehen in den Untergrund 4 steht die Betonschraube 1 unter Torsionsspannung und unter elastischer Druckspannung. Sitzt das Werkzeug 12 beim Eindrehen der Betonschraube 1 auf dem zu befestigenden Gegenstand 11 auf und bewegt sich deswegen bei weiterem Drehen nicht mehr mit der Betonschraube 1 mit, zieht die Betonschraube 1 den Außensechskant 16 mit dem Innensechskant 13 aufgrund eines Reibschluss mit dem Außensechskant 15 der Betonschraube 1 axial zumindest ein stückweit mit. Der Gummiring 18 wird dadurch elastisch vorgespannt. Kommt der Außensechskant 15 der Betonschraube 1 aus dem Innensechskant 13 mit der kleineren Schlüsselweite frei, drückt der elastisch vorgespannte Gummiring 18 den Außensechskant 16 mit dem Innensechskant 13 axial weg von der Betonschraube 1. Die Betonschraube 1, die schlagartig ihre Spannung abbaut, wenn sie aus dem Innensechskant 13 mit der kleineren Schlüsselweite des Werkzeugs 12 freikommt, schlägt nicht gegen den Innensechskant 13, wodurch eine Beschädigung des Innensechskants 13 mit der kleineren Schlüsselweite des Werkzeugs 12 vermieden wird.

## Patentansprüche

1. Selbstschneidende Betonschraube, mit einem Betonschraubengewinde (2), **dadurch gekennzeichnet, dass** die Betonschraube (1) einen Maschinengewinde (5) aufweist, auf/in das ein Schraubelement (6) auf-/eingeschraubt ist, und dass das Schraubelement (6) lösbar drehfest mit der Betonschraube (1) verbunden ist.

2. Selbstschneidende Betonschraube nach Anspruch 1, **dadurch gekennzeichnet, dass** die drehfeste Verbindung des Schraubelements (6) mit der Betonschraube (1) selbstlösend ist.

3. Selbstschneidende Betonschraube nach Anspruch 2, **dadurch gekennzeichnet, dass** die drehfeste Verbindung des Schraubelements (6) mit der Betonschraube (1) wegabhängig selbstlösend ist.

4. Selbstschneidende Betonschraube nach Anspruch 3, **dadurch gekennzeichnet, dass** die drehfeste Verbindung des Schraubelements (6) mit der Betonschraube (1) einen Auslöser (10) aufweist, der bei Aufsitzen auf einer Oberfläche die drehfeste Verbindung löst.

5. Selbstschneidende Betonschraube nach Anspruch 1, **dadurch gekennzeichnet, dass** die drehfeste Verbindung des Schraubelements (6) mit der Betonschraube (1) ein Formschlusselement (9) aufweist, das ein Drehmoment durch Formschluss vom Schraubelement (6) auf die Betonschraube (1) überträgt und das zum Selbstlösen der Verbindung ausgerückt wird und **dadurch** den Formschluss zum Schraubelement (6) und/oder zur Betonschraube (1) verliert.

6. Selbstschneidende Betonschraube nach Anspruch 1, **dadurch gekennzeichnet, dass** das Schraubelement (6) eine Mutter ist.

7. Werkzeug zum Eindrehen einer selbstschneidenden Betonschraube, mit einem ersten Werkzeugsitz (13) zu einem durch Formschluss drehfesten Ansetzen an einen Werkzeugsitz (15) der Betonschraube (1) und mit einem zweiten Werkzeugsitz (14) zu einem durch Formschluss drehfesten Ansetzen an einem Werkzeugsitz (6) eines auf/in ein Maschinengewinde (5) der Betonschraube (1) auf-/eingeschraubten Schraubelements (6), wobei die beiden Werkzeugsitze (13, 14) des Werkzeugs (12) koaxial zueinander und axial hintereinander angeordnet sind.

8. Werkzeug nach Anspruch 7, **dadurch gekennzeichnet, dass** das Werkzeug (12) zwei Innenmehrkante (13, 14) unterschiedlicher Schlüsselweiten als Werkzeugsitze aufweist.

9. Werkzeug nach Anspruch 7, **dadurch gekennzeichnet, dass** die beiden Werkzeugsitze (13, 14) axial zueinander verschieblich und drehfest miteinander sind.

10. Werkzeug nach Anspruch 9, **dadurch gekennzeichnet, dass** die Werkzeugsitze (13, 14) axial zueinander gefedert sind.
